# EUROPEAN PATENT APPLICATION

(11) **EP 4 571 900 A1**
(43) Date of publication of application: **18.06.2025**
(21) Application number: 23872316.7
(22) Date of filing: 26.09.2023
(51) Int. Cl.: H01M 8/0228, H01M 8/0206, H01M 8/0215, H01M 8/12, H01M 8/2475

(54) **ELECTROCONDUCTIVE MEMBER, ELECTROCHEMICAL CELL DEVICE, MODULE, AND MODULE ACCOMMODATION DEVICE**

(30) Priority: 29.09.2022 JP 2022156869
(71) Applicant: Kyocera Corporation, Kyoto-shi, Kyoto 612-8501 (JP)
(72) Inventor: SHINCHI, Takahiro, Kyoto-shi, Kyoto 612-8501 (JP)
(74) Representative: Viering, Jentschura & Partner mbB Patent- und Rechtsanwälte
(86) International application number: PCT/JP2023/034865
(87) International publication number: WO 2024/071093

(57) **Abstract**

A conductive member includes a base material containing chromium, a first layer including first particles each of which is a conductive oxide, and a second layer including second particles each of which is a conductive oxide. The first layer is located on the base material. The second layer is located on the first layer. The first layer has open pores that open to an interface with the second layer. The second particles include particles having a particle diameter smaller than a diameter of the open pores.

## Description

### TECHNICAL FIELD

The present disclosure relates to a conductive member, an electrochemical cell device, a module, and a module housing device.

### BACKGROUND OF INVENTION

In recent years, various fuel cell stack devices each including a plurality of fuel cells have been proposed as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: WO 2009/131180

### SUMMARY

A conductive member according to an aspect of an embodiment includes a base material containing chromium, a first layer including first particles each of which is a conductive oxide, and a second layer including second particles each of which is a conductive oxide. The first layer is located on the base material. The second layer is located on the first layer. The first layer has open pores that open to an interface with the second layer. The second particles include particles having a particle diameter that is smaller than the diameter of the open pores.

An electrochemical cell device of the present disclosure includes the conductive member described above and an electrochemical cell having a first electrode. The first electrode is bonded to a third layer located on the second layer. The third layer includes third particles having an average particle diameter greater than the second particle.

A module of the present disclosure includes the electrochemical cell device described above and a storage container housing the electrochemical cell device.

A module housing device of the present disclosure includes the module described above, an auxiliary device for operating the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from a side of an air electrode.
FIG. 1C is a side view of an example of the electrochemical cell according to the first embodiment when viewed from a side of an interconnector.
FIG. 2A is a perspective view illustrating an example of an electrochemical cell device according to the first embodiment.
FIG. 2B is a cross-sectional view taken along line X-X illustrated in FIG. 2A.
FIG. 2C is a top view illustrating an example of the electrochemical cell device according to the first embodiment.
FIG. 3A is a horizontal cross-sectional view illustrating an example of the electrochemical cell device according to the first embodiment.
FIG. 3B is a cross-sectional view taken along line A-A illustrated in FIG. 3.
FIG. 4A is an enlarged view of a region B illustrated in FIG. 3B.
FIG. 4B is an enlarged view of a region C illustrated in FIG. 4A.
FIG. 5 is an exterior perspective view illustrating an example of a module according to the first embodiment.
FIG. 6 is an exploded perspective view schematically illustrating an example of a module housing device according to the first embodiment.
FIG. 7A is a cross-sectional view illustrating an example of an electrochemical cell device according to a second embodiment.
FIG. 7B is a cross-sectional view illustrating another example of the electrochemical cell device according to the second embodiment.
FIG. 8A is an enlarged cross-sectional view taken along line D-D illustrated in FIG. 7A.
FIG. 8B is an enlarged cross-sectional view taken along line D-D illustrated in FIG. 7A.
FIG. 8C is an enlarged cross-sectional view illustrating another example of a conductive member according to the second embodiment.
FIG. 9 is a cross-sectional view illustrating an example of an electrochemical cell device according to a third embodiment.
FIG. 10 is an enlarged view of a region E illustrated in FIG. 9.
FIG. 11A is a perspective view illustrating an example of an electrochemical cell according to a fourth embodiment.
FIG. 11B is a partial cross-sectional view of the electrochemical cell illustrated in FIG. 11A.

### DESCRIPTION OF EMBODIMENTS

The fuel cell stack device described above has room for improvement in the durability of a conductive member bonded to the fuel cell.

A conductive member having high durability, an electrochemical cell device, a module, and a module housing device are expected to be provided.

Embodiments of a conductive member, an electrochemical cell device, a module, and a module housing device disclosed in the present application are described below in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

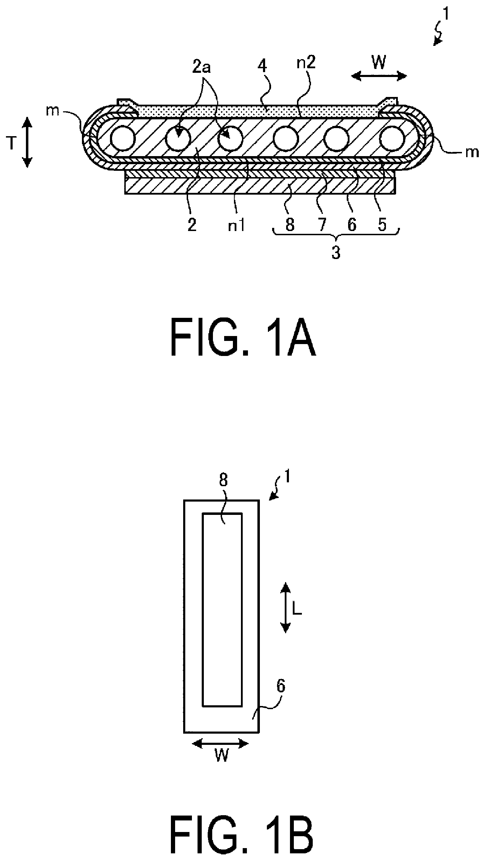

First, with reference to FIGs. 1A to 1C, an example of a solid oxide fuel cell is described as an electrochemical cell according to a first embodiment. An electrochemical cell device may include a cell stack including a plurality of electrochemical cells. The electrochemical cell device including the plurality of electrochemical cells is simply referred to as a cell stack device.

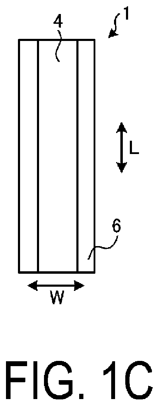

FIG. 1A is a horizontal cross-sectional view illustrating an example of an electrochemical cell according to the first embodiment. FIG. 1B is a side view of an example of the electrochemical cell according to the first embodiment when viewed from a side of an air electrode. FIG. 1C is a side view of an example of the electrochemical cell according to the first embodiment when viewed from a side of an interconnector. Note that FIGs. 1A to 1C are enlarged views each illustrating a part of each configuration of the electrochemical cell. Hereinafter, the electrochemical cell may be simply referred to as a cell.

In the example illustrated in FIGs. 1A to 1C, a cell 1 is of a hollow flat plate type, and has an elongated plate shape. As illustrated in FIG. 1B, the shape of the entire cell 1 when viewed from the side is a rectangle having a side length of, for example, 5 cm to 50 cm in a length direction L and a length of, for example, 1 cm to 10 cm in a width direction W orthogonal to the length direction L. The thickness of the entire cell 1 in a thickness direction T is, for example, 1 mm to 5 mm.

As illustrated in FIG. 1A, the cell 1 includes a conductive support substrate 2, an element portion 3, and an interconnector 4. The support substrate 2 has a pillar shape having a pair of a first surface n1 and a second surface n2 facing each other, and a pair of circular arc-shaped side surfaces m connecting the first surface n1 and the second surface n2.

The element portion 3 is located on the first surface n1 of the support substrate 2. The element portion 3 includes a fuel electrode 5, a solid electrolyte layer 6, and an air electrode 8. In the example illustrated in FIG. 1A, the interconnector 4 is located on the second surface n2 of the cell 1. Note that the cell 1 may include an intermediate layer 7 between the solid electrolyte layer 6 and the air electrode 8.

As illustrated in FIG. 1B, the air electrode 8 does not extend to a lower end of the cell 1. At a lower end portion of the cell 1, only the solid electrolyte layer 6 is exposed on a surface of the first surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, the solid electrolyte layer 6 is exposed at the surfaces at the pair of circular arc-shaped side surfaces m of the cell 1. The interconnector 4 may not extend to the lower end of the cell 1.

Hereinafter, each of constituent members constituting the cell 1 is described.

The support substrate 2 includes gas flow passages 2a therein through which a gas flows. The example of the support substrate 2 illustrated in FIG. 1A includes six gas flow passages 2a. The support substrate 2 has gas permeability, and allows the gas flowing through the gas flow passage 2a to permeate to the fuel electrode 5. The support substrate 2 may have electrical conductivity. The support substrate 2 having electrical conductivity collects electricity generated in the element portion 3 to the interconnector 4.

The material of the support substrate 2 includes, for example, an iron group metal component and an inorganic oxide. The iron group metal component may be, for example, nickel (Ni) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material can be used. The fuel electrode 5 may be a porous conductive ceramic including a material having electron conductivity and a material having ion conductivity. As the conductive ceramic, for example, a ceramic containing ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. ZrO₂ in which a calcium oxide, a magnesium oxide, or a rare earth element oxide is in solid solution may be referred to as stabilized zirconia. The stabilized zirconia may also include partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, in the range of 20% to 50%, particularly, in the range of 30% to 50%. The open porosity of the air electrode 8 may also be referred to as the porosity of the air electrode 8.

The material of the air electrode 8 is not particularly limited as long as the material is one generally used for the air electrode. The material of the air electrode 8 may be, for example, a conductive ceramic such as a so-called ABO₃ type perovskite oxide.

The material of the air electrode 8 may be, for example, a composite oxide in which strontium (Sr) and lanthanum (La) coexist at an A site. Examples of such a composite oxide include La_{y}Sr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion suppression layer. When strontium (Sr) contained in the air electrode 8 diffuses into the solid electrolyte layer 6, a resistance layer of SrZrO₃ is formed in the solid electrolyte layer 6. The intermediate layer 7 makes it difficult for Sr to diffuse, thereby making it difficult for SrZrO₃ to be formed.

The material of the intermediate layer 7 is not particularly limited as long as the material is not likely to cause the diffusion of elements between the air electrode 8 and the solid electrolyte layer 6 in general. The material of the intermediate layer 7 may contain, for example, cerium oxide (CeO₂) in which rare earth elements other than cerium (Ce) are in solid solution. As such rare earth elements, for example, gadolinium (Gd), samarium (Sm), or the like may be used.

The interconnector 4 is dense, and makes the leakage of the fuel gas flowing through the gas flow passages 2a located inside the support substrate 2 and of the oxygen-containing gas flowing outside the support substrate 2 less likely to occur. The interconnector 4 may have a relative density of 93% or more, particularly, 95% or more.

As the material of the interconnector 4, a lanthanum chromite-based perovskite oxide (LaCrO₃-based oxide), a lanthanum strontium titanium-based perovskite oxide (LaSrTiO₃-based oxide), or the like may be used. These materials have electrical conductivity, and are less likely to be reduced and also less likely to be oxidized even when brought into contact with a fuel gas such as a hydrogen-containing gas and an oxygen-containing gas such as air.

### Configuration of Electrochemical Cell Device

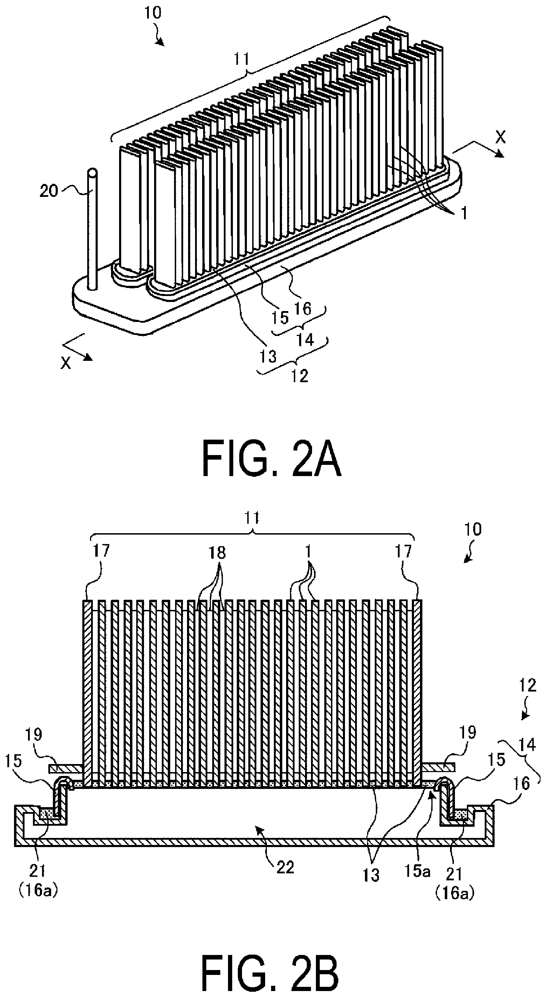

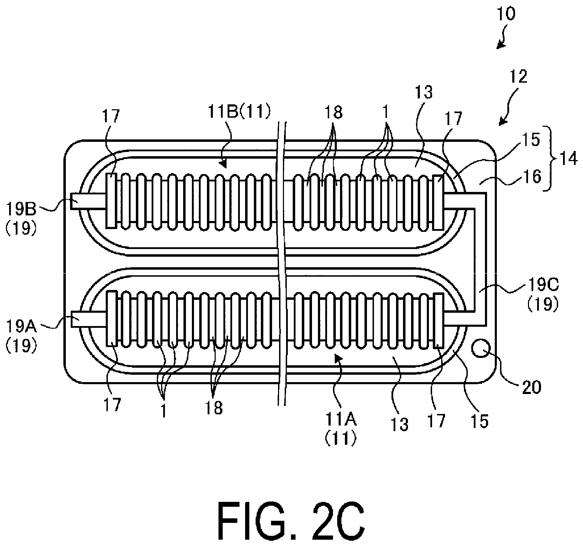

An electrochemical cell device according to the present embodiment using the cell 1 described above is described with reference to FIGs. 2A to 2C. FIG. 2A is a perspective view illustrating an example of the electrochemical cell device according to the first embodiment. FIG. 2B is a cross-sectional view taken along line X-X illustrated in FIG. 2A. FIG. 2C is a top view illustrating an example of the electrochemical cell device according to the first embodiment.

As illustrated in FIG. 2A, a cell stack device 10 includes a cell stack 11 including a plurality of the cells 1 arrayed (layered) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of a metal and electrically conductive.

As illustrated in FIG. 2B, the support body 15 includes an insertion hole 15a into which the lower end portions of the plurality of cells 1 are inserted. The lower end portions of the plurality of cells 1 and the inner wall of the insertion hole 15a are bonded by the fixing material 13.

The gas tank 16 includes an opening through which a reactive gas is supplied to the plurality of cells 1 via the insertion hole 15a, and a recessed groove 16a located on the periphery of the opening. The outer peripheral end portion of the support body 15 is bonded to the gas tank 16 by a bonding material 21 with which the recessed groove 16a of the gas tank 16 is filled.

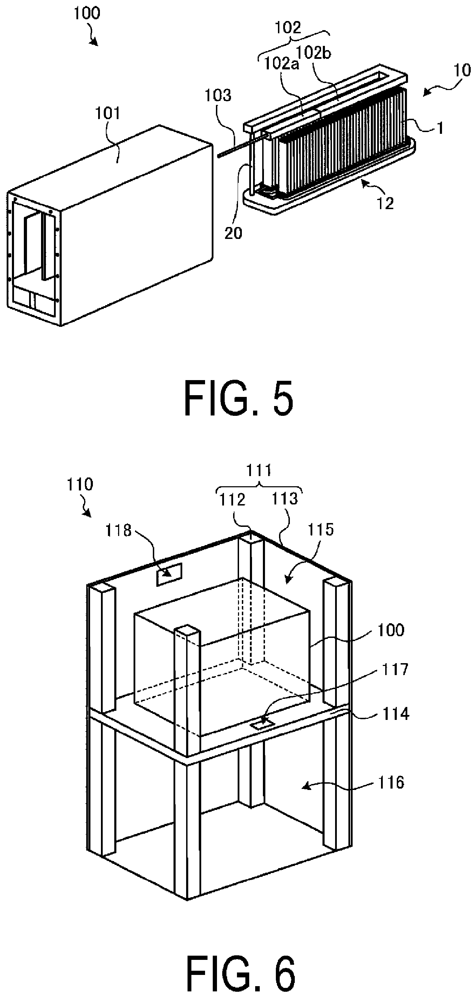

In the example illustrated in FIG. 2A, the fuel gas is stored in an internal space 22 formed by the support body 15 and the gas tank 16 constituting the support member 14. A gas circulation pipe 20 is connected to the gas tank 16. The fuel gas is supplied to the gas tank 16 through the gas circulation pipe 20 and is supplied from the gas tank 16 to the gas flow passages 2a (see FIG. 1A) inside the cells 1. The fuel gas supplied to the gas tank 16 is produced by a reformer 102 (see FIG. 5) to be described below.

A hydrogen-rich fuel gas can be produced, for example, by steam-reforming a raw fuel. When the fuel gas is produced by steam-reforming, the fuel gas contains steam.

The example illustrated in FIG. 2A includes two rows of cell stacks 11, two support bodies 15, and the gas tank 16. The two rows of the cell stacks 11 each include the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by one gas tank 16 and the two support bodies 15.

The insertion hole 15a has, for example, an oval shape in top view. The length of the insertion hole 15a in an arrangement direction of the cells 1, that is, the thickness direction T, is longer than the distance between two end current collection members 17 located at both ends of the cell stack 11, for example. The width of the insertion hole 15a is, for example, greater than the length of the cell 1 in the width direction W (see FIG. 1A).

As illustrated in FIG. 2B, the fixing material 13 is filled in bonding portions between the inner wall of the insertion hole 15a and the lower end portions of the cells 1 and is solidified. Thus, the inner wall of the insertion hole 15a and the lower end portions of the plurality of cells 1 are bonded and fixed, and the lower end portions of the cells 1 are bonded and fixed to each other. The gas flow passages 2a of each of the cells 1 communicate, at the lower end portions thereof, with the internal space 22 of the support member 14.

The fixing material 13 and the bonding material 21 can be made of a material with low electrical conductivity, such as glass. As the specific materials of the fixing material 13 and the bonding material 21, amorphous glass or the like may be used, and in particular, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, the SiO₂-MgO-based material may be used.

As illustrated in FIG. 2B, a conductive member 18 is interposed between cells 1 adjacent to each other among the plurality of cells 1. Each of the conductive members 18 electrically connects in series the fuel electrode 5 of one of the adjacent cells 1 with the air electrode 8 of the other one of the adjacent cells 1. More specifically, each of the conductive members 18 connects the interconnector 4 electrically connected to the fuel electrode 5 of one of the adjacent cells 1 and the air electrode 8 of the other one of the adjacent cells 1. Note that details of the connection between adjacent cells 1 and the conductive member 18 is described below.

As illustrated in FIG. 2B, the end current collection members 17 are electrically connected to the cells 1 located at the outermost sides in the arrangement direction of the plurality of cells 1. The end current collection members 17 are each connected to a conductive portion 19 protruding outward from the cell stack 11. The conductive portion 19 collects electricity generated by the cells 1 and conducts the electricity to outside. Note that in FIG. 2A, the end current collection members 17 are not illustrated.

As illustrated in FIG. 2C, in the cell stack device 10, two cell stacks 11A and 11B are connected in series and function as one battery. Therefore, the conductive portion 19 of the cell stack device 10 is divided into a positive electrode terminal 19A, a negative electrode terminal 19B, and a connection terminal 19C.

The positive electrode terminal 19A is a positive electrode when the electrical power generated by the cell stack 11 is output to the outside and is electrically connected to the end current collection member 17 on a positive electrode side in the cell stack 11A. The negative electrode terminal 19B is a negative electrode when the electrical power generated by the cell stack 11 is output to the outside and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Detail of Electrochemical Cell Device

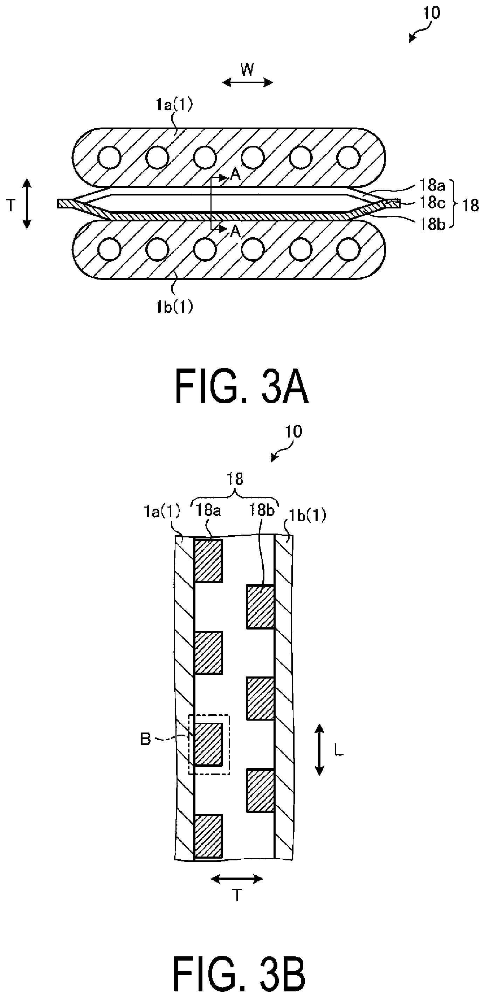

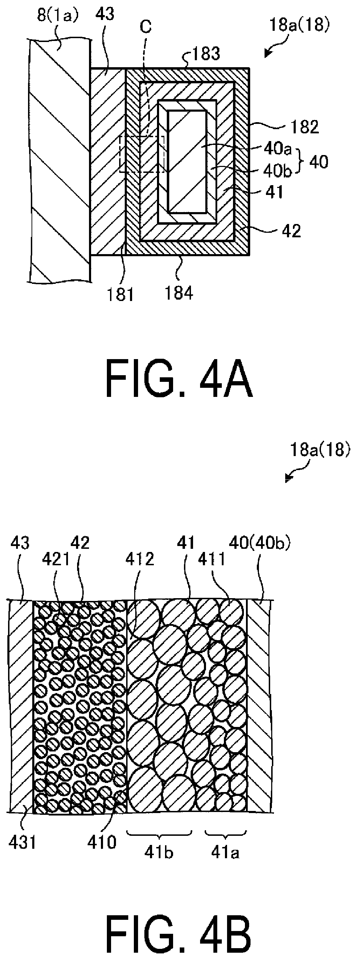

Subsequently, details of the electrochemical cell device according to the first embodiment is described with reference to FIGs. 3A, 3B, 4A, and 4B. FIG. 3A is a horizontal cross-sectional view illustrating an example of the electrochemical cell device according to the first embodiment.

As illustrated in FIG. 3A, the cell stack device 10 includes cells 1a and 1b adjacent to each other in the thickness direction T, and the conductive member 18 located between the cell 1a and the cell 1b.

The conductive member 18 includes a connecting portion 18a connected to the cell 1a that is one of adjacent cells 1 and a connecting portion 18b connected to the cell 1b that is the other one of the adjacent cells 1. The conductive member 18 includes coupling portions 18c at both ends thereof in the width direction W and the coupling portions 18c connect the connecting portions 18a and 18b. Thus, the conductive member 18 can electrically connect the cells 1 adjacent to each other in the thickness direction T. Note that in FIG. 3, the shape of each cell 1 is illustrated by simplification.

FIG. 3B is a cross-sectional view taken along line A-A illustrated in FIG. 3A. The conductive member 18 extends in the length direction L of the cell 1. As illustrated in FIG. 3B, a plurality of the connecting portions 18a and 18b of the conductive member 18 are alternately located along the length direction L of the cell 1. The conductive member 18 is in contact with the cells 1a and 1b at the connecting portions 18a and 18b.

FIG. 4A is an enlarged view of a region B illustrated in FIG. 3B. As illustrated in FIG. 4A, the conductive member 18 includes a base material 40, a first layer 41, and a second layer 42.

The base material 40 has electrical conductivity and thermal resistance. The base material 40 contains chromium. The base material 40 is made of, for example, stainless steel. The base material 40 may contain, for example, a metal oxide.

The base material 40 may have a layered structure. In the example illustrated in FIG. 4A, the base material 40 includes a first base material portion 40a and a second base material portion 40b. The second base material portion 40b may have a higher chromium content than the first base material portion 40a, for example. The second base material portion 40b contains, for example, a chromium oxide (Cr₂O₃). In this way, the base material 40 includes the second base material portion 40b, so that the durability of the conductive member 18 is enhanced. The base material 40 may include the second base material portion 40b to cover the entire first base material portion 40a, or may partially include the second base material portion 40b. The base material 40 may not include the second base material portion 40b. The base material 40 may have a further layered structure.

The first layer 41 is located on the base material 40. The first layer 41 is located between the base material 40 and the second layer 42. The first layer 41 contains a conductive oxide. The oxide may contain, for example, manganese (Mn) and cobalt (Co). The oxide may contain elements other than Mn and Co, for example, zinc (Zn) and aluminum (Al). The oxide may be a composite oxide having a spinel structure. Examples of the composite oxide having such a structure may include Zn(CoₓMn₁₋ₓ)₂O₄ (0 < x < 1) such as ZnMnCoO₄, Mn_{1.5}Co_{1.5}O₄, MnCo₂O₄, and CoMn₂O₄. The first layer 41 may contain, for example, CeO₂.

The first layer 41 may include a plurality of first particles containing a conductive oxide. The first layer 41 may also be a coating film covering the base material 40. The first layer 41 may be one coating film covering the entire base material 40. The first layer 41 may contain a component other than the conductive oxide.

The first layer 41 may be a sintered body or a pressurized powder body. The first layer 41 may be crystalline or amorphous. A crystalline phase and an amorphous phase may be mixed in the first layer 41.

The second layer 42 is located on the first layer 41. The second layer 42 includes a first surface 181 and a second surface 182 that face each other with the base material 40 interposed therebetween. The conductive member 18 includes third surfaces 183 and 184 that connect the first surface 181 and the second surface 182.

The second layer 42 includes a plurality of second particles containing a conductive oxide. The material of the second layer 42 may be, for example, a conductive ceramic such as a so-called ABO₃-type perovskite oxide.

The material of the second layer 42 may be, for example, a composite oxide in which strontium (Sr) and lanthanum (La) coexist at the A site. Examples of such a composite oxide include La_{y}Sr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

The second layer 42 can be located on the surface of the first layer 41 by a film forming method such as a DIP method.

The conductive member 18 (connecting portion 18a) may further include a third layer 43. The third layer 43 is located on the second layer 42. Although the third layer 43 is located only on the first surface 181 of the second layer 42 in the example illustrated in FIG. 4A, the third layer 43 may be located on the third surfaces 183 and 184, for example. The third layer 43 is located between the air electrode 8 at the cell 1a and the second layer 42, and bonds the air electrode 8 at the cell 1a and the conductive member 18. The air electrode 8 is a first electrode bonded to the conductive member 18.

The material of the third layer 43 may be, for example, a conductive ceramic such as a so-called ABO₃-type perovskite oxide.

The material of the third layer 43 may be, for example, a composite oxide in which strontium (Sr) and lanthanum (La) coexist at the A site. Examples of such a composite oxide include La_{y}Sr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

The third layer 43 may have gas permeability. The porosity of the third layer 43 can be, for example, 50% or less. The porosity of the third layer 43 may be, for example, greater than the porosity of the second layer 42.

FIG. 4B is an enlarged view of a region C illustrated in FIG. 4A. As illustrated in FIG. 4B, the first layer 41 of the conductive member 18 may include a plurality of first particles 411 and first pores 412 located between the plurality of first particles 411. The first pores 412 include open pores that open to an interface 410 with the second layer 42. The first layer 41 may include closed pores located inside the plurality of first particles 411 or between the plurality of first particles 411.

The plurality of first particles 411 may have, for example, an average particle diameter from 0.3 µm to 0.6 µm. The average pore diameter of the first pores 412 may be, for example, from 0.3 µm to 1.0 µm.

The second layer 42 may also include a plurality of second particles 421. The second particles 421 may include the second particles 421 having a particle diameter smaller than the diameter of the first pores 412 that open to the interface 410. Thus, a part of the second particles 421 easily enters the first pores 412 that open to the interface 410, resulting in an increase in the bonding strength between the first layer 41 and the second layer 42. Therefore, the first layer 41 and the second layer 42 are less likely to be peeled off from each other, so that the durability of the conductive member 18 and the cell stack device 10 is improved.

The average particle diameter of the second particles 421 may also be smaller than the average pore diameter of the first pores 412 included in the first layer 41. Thus, a part of the second particles 421 easily enters the first pores 412 that open to the interface 410, resulting in an increase in the bonding strength between the first layer 41 and the second layer 42. Therefore, the first layer 41 and the second layer 42 are less likely to be peeled off from each other, so that the durability of the conductive member 18 and the cell stack device 10 is improved.

The average pore diameter of the second pores included in the second layer 42 may be smaller than the average pore diameter of the first pores 412 included in the first layer 41. Thus, the strength of the second layer 42 is increased and cracks are less likely to occur inside the second layer 42, so that the durability of the conductive member 18 and the cell stack device 10 is improved.

The average particle diameter of the second particles 421 may be, for example, from 0.2 µm to 0.6 µm. The average pore diameter of the second pores included in the second layer 42 may be, for example, from 0.06 µm to 0.3 µm. The second layer 42 may have a porosity from 10% to 16%, for example.

The first layer 41 may have a first region 41a facing the base material 40 and a second region 41b facing the second layer 42 and having a greater porosity than the first region 41a. Thus, the first region 41a has higher adhesion to the base material 40 and thus has higher bonding strength, and the second region 41b has higher bonding strength to the second layer 42. Accordingly, the first region 41a and the base material 40, and the second region 41b and the second layer 42 are less likely to be peeled off from each other, so that the durability of the conductive member 18 and the cell stack device 10 is improved.

The porosity of the first region 41a may be, for example, 5% or less. The porosity of the second region 41b may be, for example, from 10% to 30%. For example, the first layer 41 may be formed by sequentially layering the plurality of first particles 411 having different average particle diameters, or may be formed by varying the time required for a heat treatment. However, the method of forming the first region 41a and the second region 41b is not limited, and the first region 41a and the second region 41b may be formed by any method.

The third layer 43 may include third particles 431 having a greater average particle diameter than the second particles 421. Thus, a part of the second particles 421 enters the gap between the third particles 431, resulting in an increase in the bonding strength between the second layer 42 and the third layer 43. Therefore, the second layer 42 and the third layer 43 are less likely to be peeled off from each other, so that the durability is improved. The third particles 431 may further include particles having a particle diameter approximately equal to the average particle diameter of the second particles 421, or may include particles having a particle diameter smaller than the average particle diameter of the second particles 421.

The average pore diameter of the third pores included in the third layer 43 may be greater than the average particle diameter of the second particles 421. Thus, the second particles 421 easily enter the gap between the third particles 431, resulting in an increase in the bonding strength between the second layer 42 and the third layer 43. Therefore, the second layer 42 and the third layer 43 are less likely to be peeled off from each other, so that the durability of the conductive member 18 and the cell stack device 10 is improved.

The third layer 43 may contain at least one element selected from among metal elements contained in the second layer 42. Thus, the affinity between the second layer 42 and the third layer 43 is increased, resulting in an increase in the bonding strength between the second layer 42 and the third layer 43. Therefore, the second layer 42 and the third layer 43 are less likely to be peeled off from each other, so that the durability is improved. The specifying of the metal elements contained in the third layer 43 and the second layer 42 can be confirmed, for example, by performing point analysis, line analysis, mapping, or the like of each element in the cross-section of the conductive member 18 by using a high angle annular dark field scanning transmission electron microscope (HAADF-STEM), a focused ion beam scanning electron microscope (FIB-SEM), or an electron probe microanalyzer (EPMA).

The material of the third layer 43 may have the same crystal structure as the material of the second layer 42. The material of the third layer 43 may have the same composition as the material of the second layer 42. When the material of the third layer 43 has the same crystal structure or the same composition as the material of the second layer 42, the affinity between the second layer 42 and the third layer 43 is further increased, resulting in a further increase in the bonding strength between the second layer 42 and the third layer 43.

The average particle diameter of the third particles 431 included in the third layer 43 may be, for example, from 0.25 µm to 6.5 µm. The average pore diameter of the third pores may be, for example, from 0.1 µm to 0.9 µm. The third layer 43 may include the third particles 431 having a particle diameter smaller than the average particle diameter of the second particles 421.

In this way, the conductive member 18 includes the first layer 41, the second layer 42, and the third layer 43, so that the bonding strength in the conductive member 18 is increased and the durability is improved. In addition, the bonding strength between the conductive member 18 and the air electrode 8 is improved by bonding the conductive member 18 and the air electrode 8 by using the third layer 43 of the conductive member 18. Thus, the durability of the cell stack device 10 can be improved.

Note that the average particle diameters of the particles contained in the first layer 41, the second layer 42, and the third layer 43, the porosities of the first layer 41, the second layer 42, and the third layer 43, and the average pore diameters of the pores contained in the first layer 41, the second layer 42, and the third layer 43 can be measured on the basis of results obtained by observing a cross-section of the conductive member 18 with a scanning electron microscope (SEM).

### Module

A module according to an embodiment of the present disclosure using the cell stack device 10 described above is described below with reference to FIG. 5. FIG. 5 is an exterior perspective view illustrating the module according to the first embodiment. FIG. 5 illustrates a state in which front and rear surfaces being a part of a storage container 101 are removed and the cell stack device 10 of the fuel cell housed in the container is taken out rearward.

As illustrated in FIG. 5, a module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene and supplies the fuel gas to the cell 1. The raw fuel is supplied to the reformer 102 through a raw fuel supply pipe 103. Note that the reformer 102 may include a vaporizer 102a for vaporizing water and a reformer 102b. The reformer 102b includes a reforming catalyst (not illustrated) to reform the raw fuel into a fuel gas. The reformer 102 can perform steam-reforming being a highly efficient reformation reaction.

The fuel gas generated by the reformer 102 is supplied to the gas flow passages 2a (see FIG. 1A) of the cell 1 through the gas circulation pipe 20, the gas tank 16, and the support member 14.

In the module 100 having the configuration described above, the temperature in the module 100 during normal power generation is from about 500°C to 1000°C due to combustion of gas and power generation by the cell 1.

As described above, the module 100 is configured by housing the cell stack device 10 capable of improving durability, so that the module 100 capable of improving durability can be obtained.

### Module Housing Device

FIG. 6 is an exploded perspective view illustrating an example of a module housing device according to the first embodiment. A module housing device 110 according to the present embodiment includes an external case 111, the module 100 illustrated in FIG. 5, and an auxiliary device (not illustrated). The auxiliary device operates the module 100. The module 100 and the auxiliary device are housed in the external case 111. Note that FIG. 6 do not illustrate some components.

The external case 111 of the module housing device 110 illustrated in FIG. 6 includes supports 112 and external plates 113. A dividing plate 114 vertically partitions the interior of the external case 111. The space above the dividing plate 114 in the external case 111 is a module housing chamber 115 for housing the module 100, and the space below the dividing plate 114 in the external case 111 is an auxiliary device housing chamber 116 for housing the auxiliary device that operates the module 100. Note that FIG. 6 do not illustrate the auxiliary device housed in the auxiliary device housing chamber 116.

The dividing plate 114 includes an air circulation hole 117 for causing air in the auxiliary device housing chamber 116 to flow to the module housing chamber 115 side. The external plate 113 for forming the module housing chamber 115 includes an exhaust hole 118 for discharging air inside the module housing chamber 115.

As described above, in the module housing device 110, the module housing chamber 115 includes the module 100 capable of improving durability, so that the module housing device 110 capable of improving durability can be obtained.

Note that, in the embodiment described above, the case where the support substrate having a hollow flat plate shape is used has been exemplified; however, the embodiment can also be applied to a cell stack device using a cylindrical support substrate.

### Second Embodiment

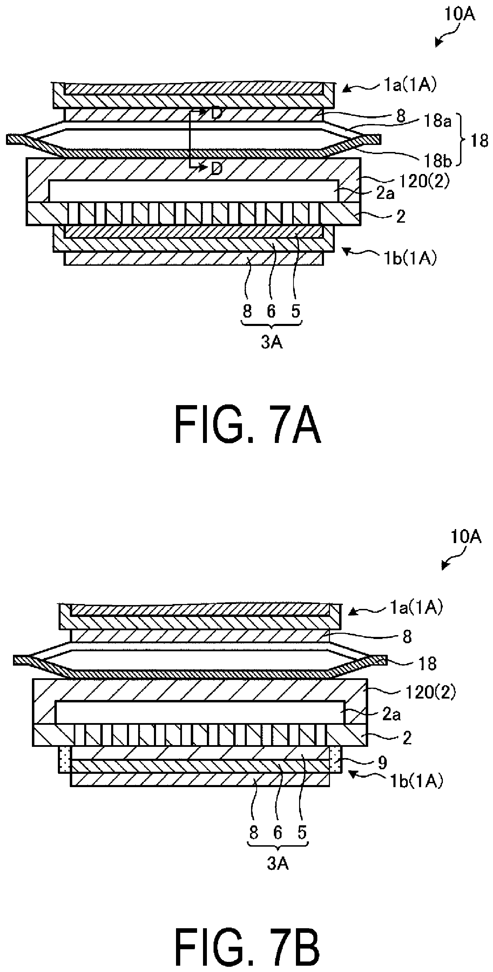

FIG. 7A is a horizontal cross-sectional view illustrating an example of an electrochemical cell according to a second embodiment. FIG. 7B is a horizontal cross-sectional view illustrating another example of the electrochemical cell according to the second embodiment.

As illustrated in FIGs. 7A and 7B, a cell 1A includes an element portion 3A in which the fuel electrode 5, the solid electrolyte layer 6, and the air electrode 8 are layered, and the support substrate 2. The support substrate 2 includes through holes or fine holes at a portion in contact with the fuel electrode 5 of the element portion 3A, and is provided with a member 120 located outside the gas flow passage 2a. The support substrate 2 can allow a gas to flow between the gas flow passage 2a and the element portion 3A. The support substrate 2 may be made of, for example, one or more metal plates. A material of the metal plate may contain chromium. The metal plate may include a conductive coating layer.

The conductive member 18 electrically connects adjacent cells 1A to each other. The conductive member 18 includes the connecting portion 18a connected to the cell 1a that is one of the adjacent cells 1 and the connecting portion 18b connected to the cell 1b that is the other one of the adjacent cells 1.

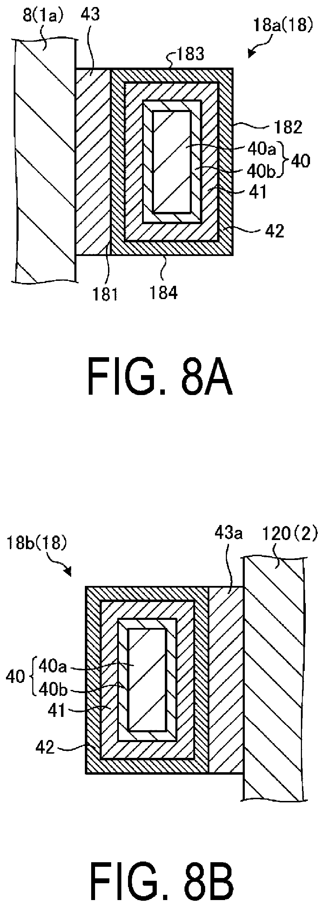

FIGs. 8A and 8B are enlarged cross-sectional views taken along line D-D illustrated in FIG. 7A. Note that FIGs. 8A and 8B can also be applied to the example in FIG. 7B.

As illustrated in FIG. 8A, the connecting portion 18a of the conductive member 18 includes the base material 40 containing chromium, the first layer 41 located on the base material 40 and including first particles of a conductive oxide, and the second layer 42 located on the first layer 41 and including second particles of a conductive oxide. The first layer 41 has open pores that open to an interface with the second layer 42. The second particles include particles having a particle diameter smaller than the diameter of the open pores of the first layer 41. Thus, a part of the second particles easily enters the open pores that open to the interface between the first layer 41 and the second layer 42, resulting in an increase in the bonding strength between the first layer 41 and the second layer 42. Therefore, the first layer 41 and the second layer 42 are less likely to be peeled off from each other, so that the durability of the conductive member 18 and a cell stack device 10A is improved.

The conductive member 18 may also include the third layer 43 located on the second layer 42. The third layer 43 includes, for example, third particles having a greater average particle diameter than the second particles. The air electrode 8 at the cell 1a is bonded to the third layer 43. Thus, the conductive member 18 and the cell 1a are less likely to be peeled off from each other, so that the durability of the cell stack device 10A is improved.

As illustrated in FIG. 8B, the connecting portion 18b of the conductive member 18 includes the base material 40 containing chromium, the first layer 41 located on the base material 40 and including first particles of a conductive oxide, and the second layer 42 located on the first layer 41 and including second particles of a conductive oxide. The first layer 41 has open pores that open to the interface with the second layer 42. The second particles include particles having a particle diameter smaller than the diameter of the open pores of the first layer 41. Thus, a part of the second particles easily enters the open pores that open to the interface between the first layer 41 and the second layer 42, resulting in an increase in the bonding strength between the first layer 41 and the second layer 42. Therefore, the first layer 41 and the second layer 42 are less likely to be peeled off from each other, so that the durability of the conductive member 18 and the cell stack device 10A is improved.

The conductive member 18 may also include a third layer 43a located on the second layer 42. The third layer 43a includes, for example, third particles having a greater average particle diameter than the second particles. The member 120 of the cell 1b is bonded to the third layer 43a. Thus, the conductive member 18 and the cell 1a are less likely to be peeled off from each other, so that the durability of the cell stack device 10A is improved. The material of the third layer 43a may be the same as or different from the material of the third layer 43.

In the example illustrated in FIG. 7A, the side surface of the fuel electrode 5 is covered with the solid electrolyte layer 6 to hermetically seal the gas flow passage 2a through which a fuel gas flows. As illustrated in FIG. 7B, the side surface of the fuel electrode 5 may be covered and sealed with a dense sealing material 9. The sealing material 9 covering the side surface of the fuel electrode 5 may have electrical insulation properties. As a material of the sealing material 9, glass or a ceramic may be used, for example.

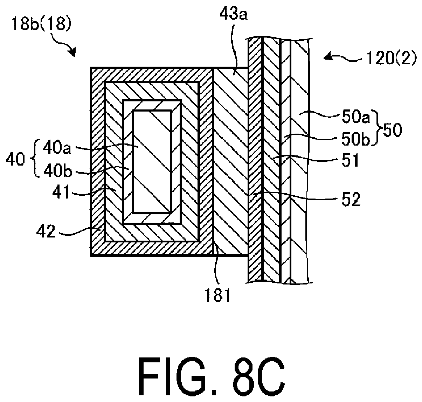

FIG. 8C is an enlarged cross-sectional view illustrating another example of the conductive member according to the second embodiment. As illustrated in FIG. 8C, the member 120 of the support substrate 2 may include a base material 50 containing chromium, a first layer 51 located on the base material 50 and including first particles of a conductive oxide, and a second layer 52 located on the first layer 51 and including second particles of a conductive oxide. The base material 50 may include a first base material portion 50a and a second base material portion 50b having a greater chromium content than the first base material portion 50a. The first layer 51 may have open pores that open to an interface with the second layer 52. The second particles may include particles having a particle diameter smaller than the diameter of the open pores of the first layer 51. Thus, a part of the second particles easily enters the open pores that open to the interface between the first layer 51 and the second layer 52, resulting in an increase in the bonding strength between the first layer 51 and the second layer 52. Therefore, the first layer 51 and the second layer 52 are less likely to be peeled off from each other, so that the durability of the member 120 and the cell stack device 10A is improved. The materials of the base material 50, the first layer 51, and the second layer 52 may be the same as or different from the materials of the base material 40, the first layer 41, and the second layer 42.

### Third Embodiment

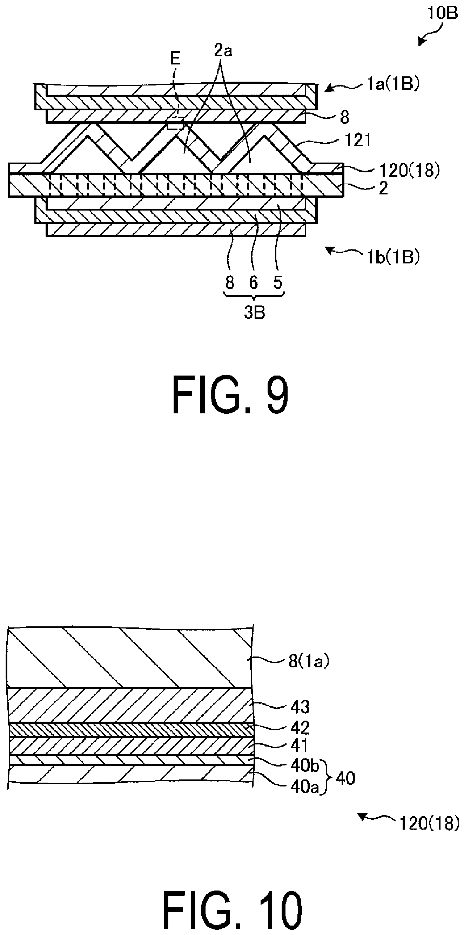

FIG. 9 is a horizontal cross-sectional view illustrating an example of an electrochemical cell device according to a third embodiment. As illustrated in FIG. 9, the gas flow passage 2a of the support substrate 2 may be formed by a member 120 having unevenness instead of the conductive member 18 illustrated in FIG. 7A. The member 120 is an example of the conductive member 18 electrically connecting adjacent cells 1B to each other.

FIG. 10 is an enlarged view of a region E illustrated in FIG. 9. As illustrated in FIG. 10, the member 120 as the conductive member 18 includes the base material 40 containing chromium, the first layer 41 located on the base material 40 and including first particles of a conductive oxide, and the second layer 42 located on the first layer 41 and including second particles of a conductive oxide. The first layer 41 has open pores that open to an interface with the second layer 42. The second particles include particles having a particle diameter smaller than the diameter of the open pores of the first layer 41. Thus, a part of the second particles easily enters the open pores that open to the interface between the first layer 41 and the second layer 42, resulting in an increase in the bonding strength between the first layer 41 and the second layer 42. Therefore, the first layer 41 and the second layer 42 are less likely to be peeled off from each other, so that the durability of the member 120 and a cell stack device 10B is improved.

The member 120 may also include the third layer 43 located on the second layer 42. The third layer 43 includes, for example, third particles having a greater average particle diameter than the second particles. The air electrode 8 at the cell 1a is bonded to the third layer 43. Thus, the conductive member 18 and the cell 1a are less likely to be peeled off from each other, so that the durability of the cell stack device 10B is improved.

The third layer 43 may be located on an entire surface 121 facing the cell 1a, or may be located only on a portion bonded to the air electrode 8.

### Fourth Embodiment

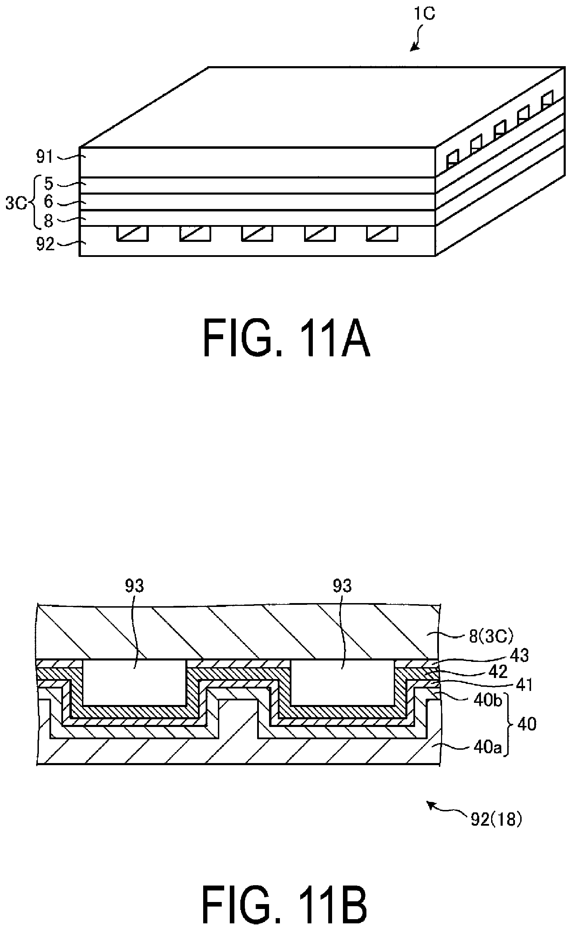

FIG. 11A is a perspective view illustrating an electrochemical cell according to a fourth embodiment. FIG. 11B is a partial cross-sectional view of the electrochemical cell illustrated in FIG. 11A.

As illustrated in FIG. 11A, a cell 1C being a flat plate-shaped electrochemical cell includes an element portion 3C in which the fuel electrode 5, the solid electrolyte layer 6, and the air electrode 8 are layered. In a cell stack device in which a plurality of flat plate cells are layered, for example, a plurality of the cells 1C are electrically connected by conductive members 91 and 92 being metal layers adjacent to each other. The conductive members 91 and 92 electrically connect adjacent cells 1C to each other, and each include gas flow passages for supplying a gas to the fuel electrode 5 or the air electrode 8.

As illustrated in FIG. 11B, in the present embodiment, the conductive member 92 as the conductive member 18 includes gas flow passages 93 for supplying a gas to the air electrode 8. The conductive member 92 includes the base material 40 containing chromium, the first layer 41 located on the base material 40 and including first particles of a conductive oxide, and the second layer 42 located on the first layer 41 and including second particles of a conductive oxide. The first layer 41 has open pores that open to an interface with the second layer 42. The second particles include particles having a particle diameter smaller than the diameter of the open pores of the first layer 41. Thus, a part of the second particles easily enters the open pores that open to the interface between the first layer 41 and the second layer 42, resulting in an increase in the bonding strength between the first layer 41 and the second layer 42. Therefore, the first layer 41 and the second layer 42 are less likely to be peeled off from each other, so that the durability of the conductive member 92 and the cell 1C is improved.

The conductive member 92 may also include the third layer 43 located on the second layer 42. The third layer 43 includes, for example, third particles having a greater average particle diameter than the second particles. The air electrode 8 at the cell 1C is bonded to the third layer 43. Thus, the conductive member 92 and the element portion 3C are less likely to be peeled off from each other, so that the durability of the cell stack device is improved.

Note that the conductive member 92 may be in direct contact with the element portion 3C without the intervention of the third layer 43. In other words, in the present embodiment, the second layer 42 may be directly connected to the element portion 3C without using the third layer 43.

### Other Embodiments

An electrochemical cell device according to other embodiments is described.

In the above embodiments, a fuel cell, a fuel cell stack device, a fuel cell module, and a fuel cell device are illustrated as examples of the "electrochemical cell", the "electrochemical cell device", the "module", and the "module housing device"; however, other examples include an electrolytic cell, an electrolytic cell stack device, an electrolytic module, and an electrolytic device, respectively. The electrolytic cell includes an anode (oxygen electrode) being a first electrode and a cathode being a second electrode, and decomposes steam into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in each of the above embodiments, the electrolyte material may be a hydroxide ion conductor.

Although the present disclosure has been described in detail, the present disclosure is not limited to the aforementioned embodiments, and various changes, improvements, and the like can be made without departing from the gist of the present disclosure.

In an embodiment, (1) a conductive member includes a base material containing chromium,
a first layer located on the base material and including first particles each of which is a conductive oxide, and
a second layer located on the first layer and including second particles each of which is a conductive oxide,
wherein the first layer includes open pores that open to an interface with the second layer, and the second particles include particles having a particle diameter that is smaller than a diameter of the open pores.

(2) In the conductive member of the above (1), an average particle diameter of the second particles may be smaller than an average pore diameter of first pores included in the first layer.

(3) In the conductive member of the above (1) or (2), an average pore diameter of second pores included in the second layer may be smaller than an average pore diameter of the first pores included in the first layer.

(4) In the conductive member of any one of the above (1) to (3), the first layer may include a first region facing the base material, and a second region facing the second layer and having a porosity higher than the first region.

(5) The conductive member of any one of the above (1) to (4) may further include a third layer located on the second layer and including third particles having an average particle diameter greater than the second particles.

(6) In the conductive member of the above (5), an average pore diameter of the third pores included in the third layer may be greater than the average particle diameter of the second particles.

(7) In the conductive member of the above (5) or (6), third layer may contain at least one element selected from metal elements contained in the second layer.

(8) In an embodiment, an electrochemical cell device includes the conductive member of any one of the above (5) to (7), and
an electrochemical cell including a first electrode,
wherein the first electrode is bonded to the third layer.

(9) A module includes the electrochemical cell device of the above (8), and
a storage container housing the electrochemical cell device.

(10) A module housing device includes the module of the above (9),
an auxiliary device configured to operate the module, and
an external case housing the module and the auxiliary device.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1, 1A, 1B, 1C Cell
2 Support substrate
3, 3A, 3B, 3C Element portion
4 Interconnector
5 Fuel electrode
6 Solid electrolyte layer
7 Intermediate layer
8 Air electrode
10, 10A, 10B Cell stack device
11 Cell stack
12 Fixing member
13 Fixing material
14 Support member
15 Support body
16 Gas tank
17 End current collection member
18 Conductive member
40 Base material
41 First layer
42 Second layer
43 Third layer
100 Module
110 Module housing device

## Claims

1. A conductive member comprising:
a base material containing chromium;
a first layer located on the base material and comprising first particles each of which is a conductive oxide; and
a second layer located on the first layer and comprising second particles each of which is a conductive oxide, wherein
the first layer comprises open pores that open to an interface with the second layer, and
the second particles comprise particles having a particle diameter that is smaller than a diameter of the open pores.

2. The conductive member according to claim 1, wherein
an average particle diameter of the second particles is smaller than an average pore diameter of first pores contained in the first layer.

3. The conductive member according to claim 1 or 2, wherein
an average pore diameter of second pores contained in the second layer is smaller than an average pore diameter of first pores contained in the first layer.

4. The conductive member according to any one of claims 1 to 3, wherein
the first layer comprises:
a first region facing the base material; and
a second region facing the second layer and having a porosity higher than the first region.

5. The conductive member according to any one of claims 1 to 4, further comprising:
a third layer located on the second layer, and comprising third particles having an average particle diameter greater than the second particles.

6. The conductive member according to claim 5, wherein
an average pore diameter of the third pores comprised in the third layer is greater than the average particle diameter of the second particles.

7. The conductive member according to claim 5 or 6, wherein
the third layer contains at least one element selected from metal elements contained in the second layer.

8. An electrochemical cell device comprising:
the conductive member according to any one of claims 5 to 7; and
an electrochemical cell comprising a first electrode, wherein
the first electrode is bonded to the third layer.

9. A module comprising:
the electrochemical cell device according to claim 8; and
a storage container housing the electrochemical cell device.

10. A module housing device comprising:
the module according to claim 9;
an auxiliary device configured to operate the module; and
an external case housing the module and the auxiliary device.
